# EUROPEAN PATENT SPECIFICATION

(11) **EP 3 128 267 B1**
(45) Date of publication and mention of the grant of the patent: **03.10.2018**
(21) Application number: 15191092.4
(22) Date of filing: 22.10.2015
(51) Int. Cl.: F25D 3/10, A23L 3/375, F25B 19/00

(54) **APPARATUS AND METHOD FOR PROVIDING LIQUID CRYOGEN WITH PULSED FLOW**
VORRICHTUNG UND VERFAHREN ZUR BEREITSTELLUNG FLÜSSIGER KRYOGENFLÜSSIGKEIT MIT IMPULSDURCHFLUSS
APPAREIL ET PROCÉDÉ DE FOURNITURE DE CRYOGÈNE LIQUIDE À ÉCOULEMENT PULSÉ

(30) Priority: 03.08.2015 US 201514816098
(43) Date of publication of application: 08.02.2017
(73) Proprietor: Linde Aktiengesellschaft, 80331 München (DE)
(72) Inventor: NEWMAN, Michael D., Hillsborough, NJ New Jersey 08844 (US)
(74) Representative: Gellner, Bernd

(56) References cited:
- US-A- 3 673 810
- US-A- 5 085 056
- US-A- 6 070 416
- US-A1- 2004 154 317

## Description

### Technical field of the present invention

The present invention relates to freezer tunnel apparatus for cryogenically chilling products, in particular to food freezer tunnel apparatus for cryogenically chilling food products, and related processes therefore.

### Technological background of the present invention

Food freezing tunnels, such as for example those that use cryogenic substances to chill and/or freeze food products, are limited in their capacity by the overall heat transfer co-efficient that can be used on the products. For example, many food freezing tunnels rely upon increasing heat transfer effect by correspondingly increasing air flow velocity across the product for which the heat transfer is to be applied.

There are, unfortunately, practical and economic limitations in many of these apparatus and methods and therefore, the increased heat transfer effect is not fully realized, especially with and during large scale industrial operations.

The food processing industry would benefit from increased heat transfer effect with food freezing applications, because greater heat transfer effect results in being able to use smaller apparatus or conversely, using apparatus which can increase the production or flow through rate of products to be chilled or frozen.

Some improvements are known and have found their way into food freezing tunnels. For example, spray nozzles are now used to increase the overall heat transfer effecting during the freezing process by spraying liquid nitrogen (LIN) through the nozzles directly onto the surface of the food product to contact same with droplets of that cryogenic substance.

These small nitrogen droplets evaporate quickly upon contact with the warm food product, thereby removing or transferring heat immediately from the surface of the food product to chill and further freeze same.

Other apparatus and systems use high pressure LIN to provide heat transfer at the surface of the food product. However, these known apparatus and processes are expensive, can result in an unusually large amount of the nitrogen product being lost to waste or alternatively, require additional equipment to recycle unused nitrogen.

In both instances, increased costs and a larger footprint of the food freezing tunnel are necessary, thereby making the known type of apparatus and processes less efficient and less cost-effective.

### Disclosure of the present invention: object, solution, advantages

Starting from the disadvantages and shortcomings as described above as well as taking the prior art as discussed into account, an object of the present invention is to overcome the limitations and problems that earlier apparatus and methods have experienced.

This object is accomplished by an apparatus comprising the features of claim 1 or of claim 7 as well as by a method comprising the features of claim 11 or of claim 13. Advantageous embodiments and expedient improvements of the present invention are disclosed in the respective dependent claims.

The present invention basically provides for a pulsed liquid cryogen flow generator and for a corresponding method; in particular, there is provided herein a generator apparatus embodiment for providing a pulsed flow of liquid cryogen which includes a first tank containing a first portion of liquid cryogen; a second tank containing a second portion of liquid cryogen, the second tank in fluid communication with the first tank and having an outlet; a third tank containing gaseous cryogen under pressure, the third tank in fluid communication with the first and second tanks; and a pair of valves consisting of a first valve disposed to alternate between interrupting and providing fluid communication between the second and third tanks, and a second valve constructed and arranged to coact 180 degrees out-of-phase with the first valve and disposed to alternate between pressurizing and releasing pressure of the second portion of the liquid cryogen for providing discrete pulses of liquid cryogen from the outlet.

Another advantageous apparatus embodiment may call for
- the liquid cryogen comprising liquid nitrogen (LIN), and the gaseous cryogen comprising nitrogen (N₂); or
- the liquid cryogen comprising liquid carbon dioxide, and the gaseous cryogen comprising carbon dioxide (CO₂).

A nozzle may be expediently disposed at the outlet, said discrete pulses of liquid cryogen favourably passing through said nozzle at the outlet.

In a preferred embodiment of the present invention,
- the first tank may comprise a first headspace above the first portion, the third tank advantageously being in fluid communication with said first headspace, and/or
- the second tank may comprise a second headspace above the second portion, the third tank advantageously being in fluid communication with said second headspace.

Another expedient embodiment of the apparatus may call for the first and second valves to coact 180 degrees out-of-phase with each other, in particular responsive to an amount and pressure of the second portion within the second tank.

According to favoured embodiment of the present invention, a pump may coact with the fluid communication between the first and third tanks for providing pressure to the gaseous cryogen, in particular increasing the pressure of the gas from for example about 30 psig (= 206.844 kPa) up to about 200 psig (= about 1.379 MPa). A gate valve may also be provided in the pipe to control the flow of the gaseous cryogen from the first headspace 26 to the pump.

There is also provided an apparatus embodiment for providing liquid cryogen with a pulsed flow including a first tank containing liquid cryogen; a second tank containing gaseous cryogen under pressure, the second tank in fluid communication with the first tank and including an outlet; and a pair of valves including a first valve disposed to alternate between interruption and continuance of the fluid communication between the first and second tanks, and a second valve disposed for coaction up to 180 degrees out-of-phase with the first valve to repetitively cycle between pressurizing and releasing pressure of the liquid cryogen for providing discrete pulses of said liquid cryogen from the outlet.

In a preferred embodiment of the present invention, there may be provided a bulk tank of additional liquid cryogen therein and including a headspace having additional gaseous cryogen above the additional liquid cryogen, the additional liquid cryogen in fluid communication with the first tank and the additional gaseous cryogen in the headspace in fluid communication with the second tank.

The liquid cryogen may advantageously be a liquid selected from the group consisting of liquid nitrogen (LIN) and liquid carbon dioxide (CO₂), and/or the gaseous cryogen may advantageously be a gas selected from the group consisting of gaseous nitrogen (N₂) and carbon dioxide (CO₂).

Another expedient embodiment of the apparatus may call for a first sensor and a second sensor spaced apart within an interior of the first tank, the first sensor favourably sensing an upper limit of liquid cryogen in the first tank and the second sensor favourably sensing a lower limit of said liquid cryogen in the first tank. The sensors may preferably transmit respective signals to a controller in order to determine what additional amount of the liquid cryogen must be permitted to flow into the first tank.

There is also provided a method embodiment of providing liquid cryogen with a pulsed flow including providing a first tank containing liquid cryogen therein; providing a second tank containing gaseous cryogen therein, the second tank in fluid communication with the first tank; and repetitively pressurizing the first tank with the gaseous cryogen from the second tank and releasing the pressure for correspondingly forcing discrete pulses of the liquid cryogen to be released from the first tank.

According to preferred embodiment of the present invention, a flow of the liquid cryogen with the discrete pulses of liquid cryogen may be supplied.

The liquid cryogen may advantageously be a liquid selected from the group consisting of liquid nitrogen (LIN) and liquid carbon dioxide (CO₂), and/or the gaseous cryogen may advantageously be a gas selected from the group consisting of gaseous nitrogen (N₂) and carbon dioxide (CO₂).

There is also provided another method embodiment of providing liquid cryogen with a pulsed flow including containing an amount of liquid cryogen; containing an amount of gaseous cryogen under pressure; providing fluid communication between the liquid cryogen and the gaseous cryogen; and repetitively interrupting and continuing the fluid communication of the pressurized gaseous cryogen to contact the liquid cryogen for generating the pulsed flow of liquid cryogen.

In an expedient embodiment of the present invention, the flow of the liquid cryogen having pulses of liquid cryogen may be continued.

The liquid cryogen may favourably be a liquid selected from the group consisting of liquid nitrogen (LIN) and liquid carbon dioxide (CO₂), and/or the gaseous cryogen may advantageously be a gas selected from the group consisting of gaseous nitrogen (N₂) and carbon dioxide (CO₂).

In order to be able to determine the need for replenishment of liquid cryogen, the amount of said liquid cryogen may preferably be sensed, in particular by means of
- a first level probe or level sensor to sense a maximum height of said liquid cryogen, and
- a second level probe or level sensor to sense a minimum height of said liquid cryogen.

### Brief description of the drawings

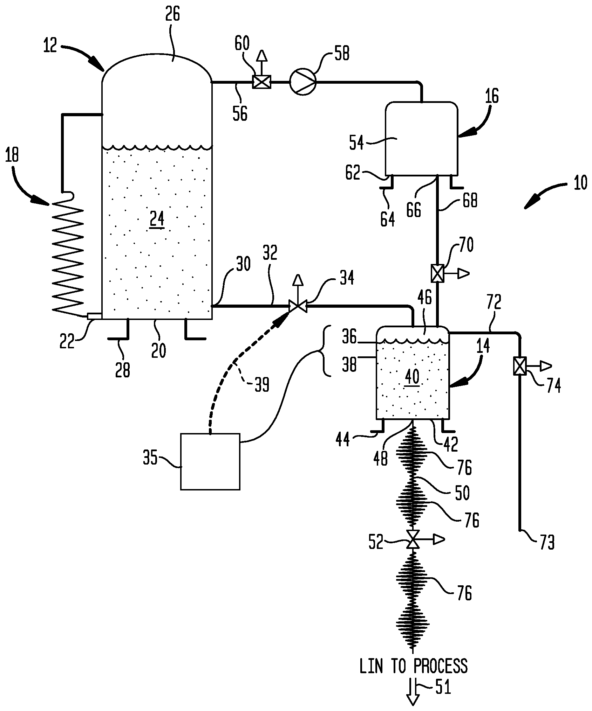

For a more complete understanding of the present embodiment disclosures and as already discussed above, there are several options to embody as well as to improve the teaching of the present invention in an advantageous manner. To this aim, reference may be made to the claims dependent on claim 1, on claim 7, on claim 11 as well as on claim 13; further improvements, features and advantages of the present invention are explained below in more detail with reference to particular and preferred embodiments by way of nonlimiting example and to the appended drawing figure taken in conjunction with the following description of the embodiments and showing an embodiment of a pulsed liquid cryogen flow generator apparatus according to the present invention, said embodiment working according to the method of the present invention and to be used with for example food products.

### Detailed description of the drawings; best way of embodying the present invention

Before explaining the inventive embodiments in detail, it is to be understood that the present invention is not limited in its application to the details of construction and arrangement of parts illustrated in the accompanying drawings, if any, since the present invention is capable of other embodiments and being practiced or carried out in various ways. Also it is to be understood that the phraseology or terminology employed herein is for the purpose of description and not of limitation.

Generally, a pulsed liquid cryogen flow generator apparatus of the present embodiments produces small droplets of a cryogenic substance, such as for example LIN, in combination with high pressure pulses of the LIN to provide high heat transfer rates for products, such as for example food products. The result is that an impingement heat transfer effect is created by cryogen beneath a spray nozzle for the apparatus.

Additionally, if the LIN is in a saturated range while a liquid pressure wave pulse is introduced, some nitrogen gas could be created in the flow stream as a result of rapid pressure change. This may occur because the saturated LIN is at its thermodynamic state of liquid nitrogen in vapour - liquid equilibrium or at its boiling point, whereby it exists as a pure liquid at this stage, but can either vaporize a subcool in response to changes in pressure or temperature.

Accordingly, the degree or range of pressure fluctuation will have an impact on the degree of a two-phase flow passing through nozzle(s) of the apparatus, and can be used as a method of controlling the discharge of the pulsed LIN from the nozzle(s).

A pulsed liquid cryogen flow generator apparatus of the present embodiments is shown generally at 10. As used herein, the apparatus 10 may also be referred to as a "generator" or a "generator apparatus". Cryogens that can be used in the generator are, for example, liquid nitrogen (LIN) or carbon dioxide (CO₂) liquid, although pulsing of CO₂ would require control parameters having to be limited due to the triple point of CO₂.

For the purpose of the description herein and by way of example only, the cryogen referred to will be nitrogen, whether LIN or gaseous nitrogen.

The apparatus 10 includes a plurality of tanks 12, 14, 16 or vessels. The tank 12 is a liquid nitrogen (LIN) bulk tank, vertically arranged by way of example only, and includes a pressure control vaporizer 18 of conventional construction and operatively associated with the tank.

A bottom 20 of tank 12 is provided with an outlet 22, such as for example a spigot, which is in fluid communication with one end of the vaporizer 18 and through which LIN 24 in the tank 12 can be passed to phase change into gaseous nitrogen and be introduced at an opposite end of the vaporizer 18 into a headspace 26 or ullage of the tank 12.

The pressure in the tank 12 is maintained at approximately 30 psig [= thirty pounds per square inch gauge = 206.844 Kilopascal (kPa)]. Supports 28 or footings, adjustable or fixed, support the tank 12 off an underlying surface. The tank 12 may also be referred to herein as the "bulk tank" or the "main tank".

There is also provided at the bottom 20 of the tank 12 an outlet 30 in fluid communication with a pipe 32 having an opposed end in fluid communication with the tank 14 which has a smaller volume than the tank 12. The tank 14 may be referred to as the "secondary" or "ancillary" tank. A control valve 34 is interposed in the pipe 32 for a purpose to be described hereinafter. The tank 14 receives a stream of the LIN 24 from the tank 12 via the pipe 32, wherein a substantially constant volume of LIN 40 is maintained in the tank 14.

To accomplish this, level probes 36, 38 are installed in the tank 14 to sense a maximum height of the LIN 40 in the tank (probe 36) and a minimum level of the LIN in the tank (probe 38). The level probes 36, 38 transmit respective signals to a controller 35 which is connected to the control valve 34 via wiring 39 to accordingly respond to the signals transmitted by the probes 36, 38 to determine what additional amount of the LIN 24 must be permitted to flow through the pipe 32 into the tank 14.

Any known arrangement of probes 36, 38, valving 34 and controller 35 coacting to maintain a fluid level of the LIN 40 in the tank 14 can be used. The amount of the LIN 40 in the tank 14 is therefore maintained at a level not to exceed a probe capacitance at 36 or be less than a probe capacitance at 38.

A bottom 42 of the tank 14 is supported off an underlying surface with supports 44 or footings, adjustable or fixed. A headspace 46 or ullage of the tank 14 is present above the LIN 40 and into which the LIN 24 flows from the pipe 32. That is, the headspace 46 of the tank 14 is in fluid communication with the LIN 24 in the tank 12.

The bottom 42 of the tank 14 also includes an outlet 48 in fluid communication with an exhaust 50 which functions as the injection pipe for the apparatus 10. The LIN 40 in the tank 14 flows through the injection pipe 50 for application processes and/or to nozzles 51 downstream of the tank 14 and in a manner to be described hereinafter. The injection pipe 50 also includes a control valve 52 or gate valve.

The tank 16 is constructed and arranged to hold a volume of high pressure nitrogen (N₂) gas 54. The tank 16 may also be referred to herein as the "pressurizing tank" or the "gas tank", and such gas is provided from the main tank 12. That is, gaseous nitrogen from the headspace 26 of the tank 12 is withdrawn through a pipe 56 in fluid communication with the headspace 26 and provided to the pressure tank 16.

The gas is removed from the headspace 26 along the pipe 56 by a pressure pump 58 interposed in the pipe 56. The pressure pump 58 increases the pressure of the gas from approximately 30 psig (= from approximately 206.844 kPa) in the tank 12 up to 200 psig (= to 1.379 MPa) within the tank 16. A gate valve 60 is also provided in the pipe 56 to control the flow of the gas from the headspace 26 to the pressure pump 58.

The tank 16 includes a bottom 62 from which supports 64 or legs, adjustable or fixed, extend to support the tank 16 off an underlying surface. The bottom 62 is provided with an outlet 66 which is in fluid communication with pipe 68. The pipe 68 functions as a gas line in fluid communication with the headspace 46 of the secondary tank 14.

A high speed valve 70 is interposed in the gas line 68 to control the flow of the gas 54 from the tank 16 to the headspace 46 of the secondary tank 14, and to also control a pressure pulsation rate of the gas as explained below.

A nitrogen gas vent line 72 or pipe has one end in fluid communication with the headspace 46 of the secondary tank 14 and an opposite end in fluid communication with an outlet 73 to atmosphere or subsequent application process.

Another high speed valve 74 is interposed in the vent line 72 upstream of the outlet 73. The high speed valves 70, 74 will operate 180 degrees out-of-phase with each other during operation of the apparatus 10. That is, when valve 70 is open, valve 74 will be closed, and vice versa.

Operation of the apparatus 10 is as follows. The secondary or ancillary tank 14 is filled with the LIN 40 to the higher level indicated by the level probe 36 or sensor. The LIN 40 in the tank 14 is obtained from the pipeline 32 which is in fluid communication with the LIN 24 in the main tank 12.

At this time in the process, pressure in the tank 14 is 30 psig (= 206.844 kPa), and the LIN 40 discharged from the outlet 48 and through the injection pipe 50, and the nozzles 51 if used, is flowing into the freezing process at 30 psig (= at 206.844 kPa) to contact food products (not shown), for example.

Nitrogen gas is present in the gas tank 16 up to a pressure of as much as 200 psig (= 1.379 MPa), for example, as provided by the pump 58. The pump 58 draws gaseous nitrogen from the headspace 26 through the pipe 56 to the tank 16.

Valve 70 is actuated to an open position, while valve 74 is actuated to a closed position. The corresponding pressure which results from introducing the gaseous nitrogen from the gas tank 16 through the pipe 68 to the headspace 46 in the ancillary tank 14 is thereby increased up to 200 psig (= 1.379 MPa) by this positioning of the valves 70, 74.

The rapid opening of the valve 70 concurrent with the valve 74 being closed permits a pulse 76 of LIN to be emitted from the outlet 48 of the tank 14. This occurs because when the valve 70 is quickly opened a burst of pressurized nitrogen gas is introduced into the headspace 46 for pulsing a portion 76 of the LIN 40 from the outlet 48 to and through the nozzles 51 (if used).

The valve 70 is then closed, and valve 74 is opened so that the pressure in the headspace 46 is again reduced. The pressure in the tank 16 is maintained at 200 psig (= 1.379 MPa) by the pump 58 at which time the valve 70 is again opened and the valve 74 is closed to again emit the LIN pulse 76 from the tank 14.

The result is that a pressure pulse is generated in the flowing LIN for the process, such that the pressure increases from 30 psig (= from 206.844 kPa) to 200 psig (= to 1.379 MPa) for a short period of time, approximately 0.1 seconds to 1.0 seconds. This process continues repetitively with valves 70, 74 opening and closing up to 180 degrees out-of-phase with each other as the LIN flow is forced from the tank 14 and into the injection pipe 50 as pulses 76 of LIN.

Another embodiment has the valves 70, 74 opening and closing exactly (180 degrees) out-of-phase with each other.

An alternate embodiment includes having a continuous stream or flow of the LIN 40 flowing through the injection pipe 50, even as pressure in the pipe is between 30 psig (= 206.844 kPa) to 200 psig (= 1.379 MPa) during occurrence of the pulses 76. That is, the pulses 76 occur in the LIN 40 flowing through and out of the pipe 50, and the nozzle 51 if being used.

Eventually, the LIN 40 in the tank 14 will need to be replenished from the tank 12. At such time, the LIN 24 will be fed through the outlet 30 into the pipe 32 and thereafter into the tank 14 either between pulses if needed, or when the level probe 38 or sensor is triggered and transmits a signal that a refill of the LIN 40 is needed for the tank 14. At such time for replenishment, a delay in the operation process must be provided in order to implement a refill of the LIN 40 to the tank 14.

If the nature of the process of chilling the food product is such that a refill time period for the tank 14 cannot be accommodated, then a plurality of the apparatus 10 can be used so that there is never down time of the apparatus and a delay or cessation of the process. Accordingly, when a plurality of the apparatus 10 are used, at least one apparatus can be in operation, while the other apparatus is in a recharge mode.

If a plurality of the apparatus 10 are used, only one additional apparatus of the plurality needs to have another one of the tanks 14, so that one tank can be in refill mode while the other tank is in operation mode, whereby the process can continue uninterrupted for as long as necessary.

As shown in the Figure, LIN pulses 76 pass through the injection pipe 50 to be provided to a freezing system and/or spray nozzle 51 used in food chilling and/or processing applications.

The apparatus provides the pulses 76 of LIN without any gas entrainment in the LIN pulses, such that the LIN alone contacts the food products for heat transfer at same. If saturated LIN is fed into the tank 14, however, nitrogen gas will be created in pulses having increased pressure if the pulses are exhausted from the tank. If subcooled LIN is fed into the tank 14, an upper pressure limit of the pulses could be controlled so that no nitrogen gas is created during the pulsing process.

CO₂ and liquid CO₂ can be used instead of the LIN and gaseous nitrogen, but other control equipment and parameters would be necessary to operate the apparatus 10 and related process with the CO₂.

It will be understood that the embodiments described herein are merely exemplary, and that one skilled in the art may make variations and modifications without departing from the scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference numerals

- 10: apparatus
- 12: tank or vessel, in particular bulk tank or main tank, for example liquid cryogen bulk tank or liquid cryogen main tank, such as liquid nitrogen (LIN) bulk tank or liquid nitrogen (LIN) main tank
- 14: tank or vessel, in particular secondary or ancillary tank
- 16: tank or vessel, in particular gas tank or pressurizing tank
- 18: pressure control vaporizer
- 20: bottom of tank or vessel 12
- 22: outlet, in particular spigot, at bottom 20 of tank or vessel 12
- 24: liquid cryogen, in particular liquid nitrogen (LIN), in tank or vessel 12
- 26: headspace or ullage of tank or vessel 12
- 28: support or footing, in particular adjustable or fixed support or footing, for bottom 20
- 30: outlet at bottom 20 of tank or vessel 12
- 32: pipe or line
- 34: control valve
- 35: controller
- 36: probe or sensor, in particular level probe or level sensor, in tank or vessel 14
- 38: probe or sensor, in particular level probe or level sensor, in tank or vessel 14
- 39: wiring
- 40: liquid cryogen, in particular liquid nitrogen (LIN), in tank or vessel 14
- 42: bottom of tank or vessel 14
- 44: support or footing, in particular adjustable or fixed support or footing, for bottom 42
- 46: headspace or ullage of tank or vessel 14
- 48: outlet of bottom 42
- 50: exhaust or injection pipe
- 51: nozzle, in particular spray nozzle
- 52: control valve or gate valve
- 54: gaseous cryogen, in particular high pressure gaseous cryogen, for example nitrogen (N₂) gas, in tank or vessel 16
- 56: pipe or line
- 58: pump, in particular pressure pump
- 60: gate valve
- 62: bottom of tank or vessel 16
- 64: support or leg, in particular adjustable or fixed support or leg, for bottom 62
- 66: outlet
- 68: pipe or line, in particular gas pipe or gas line
- 70: valve, in particular high speed valve
- 72: cryogen gas vent line or cryogen gas vent pipe, in particular nitrogen gas vent line or nitrogen gas vent pipe
- 73: outlet to atmosphere or subsequent application process
- 74: valve, in particular high speed valve
- 76: pulsed flow or pulsed portion or pulse of liquid cryogen 40

## Claims

1. An apparatus (10) for providing liquid cryogen (40) with a pulsed flow (76), comprising:
- a first tank (12) containing a first portion of liquid cryogen (24) therein;
- a second tank (14) containing a second portion of liquid cryogen (40) therein and including an outlet (48), the second tank (14) in fluid communication with the first tank (12) and the first portion therein;
- a third tank (16) containing gaseous cryogen (54) under pressure, the third tank (16) in fluid communication with the first tank (12) and the second tank (14); and
- a pair of valves (70, 74) comprising
-- a first valve (70) disposed to alternate between interruption and continuance of the fluid communication between the second tank (14) and the third tank (16), and
-- a second valve (74) disposed for coaction up to 180 degrees out-of-phase with the first valve (70) to provide discrete pulses (76) of said second portion of the liquid cryogen (40) from the outlet (48).

2. The apparatus according to claim 1, further comprising a nozzle (51) disposed at the outlet (48) and through which pass said discrete pulses (76) of liquid cryogen (40).

3. The apparatus according to claim 1 or 2, wherein
- the first tank (12) comprises a first headspace (26) above the first portion, and
- the third tank (16) is in fluid communication with the first headspace (26).

4. The apparatus according to at least one of claims 1 to 3, wherein
- the second tank (14) comprises a second headspace (46) above the second portion, and
- the third tank (16) is in fluid communication with the second headspace (46).

5. The apparatus according to at least one of claims 1 to 4, wherein the first valve (70) and the second valve (74) coact 180 degrees out-of-phase responsive to an amount and pressure of the second portion of the liquid cryogen (40) within the second tank (14).

6. The apparatus according to at least one of claims 1 to 5, further comprising a pump (58) coacting with the fluid communication between the first tank (12) and third tank (16) for providing pressure to the gaseous cryogen (54).

7. An apparatus (10) for providing liquid cryogen (40) with a pulsed flow (76), comprising:
- a first tank (14) containing liquid cryogen (40);
- a second tank (16) containing gaseous cryogen (54) under pressure, the second tank (16) in fluid communication with the first tank (14) and including an outlet (48); and
- a pair of valves (70, 74) comprising
-- a first valve (70) disposed to alternate between interruption and continuance of the fluid communication between the first tank (14) and the second tank (16), and
-- a second valve (74) disposed for coaction up to 180 degrees out-of-phase with the first valve (70) to repetitively cycle between pressurizing and releasing pressure of the liquid cryogen (40) for providing discrete pulses (76) of said liquid cryogen (40) from the outlet (48).

8. The apparatus according to claim 7, further comprising a bulk tank (12) of additional liquid cryogen (24) therein and including a headspace (26) having additional gaseous cryogen above the additional liquid cryogen (24),
- the additional liquid cryogen (24) in fluid communication with the first tank (14), and
- the additional gaseous cryogen in the headspace (26) in fluid communication with the second tank (16).

9. The apparatus according to claim 7 or 8, further comprising a first sensor (36) and a second sensor (38) spaced apart within an interior of the first tank (14),
- the first sensor (36) sensing an upper limit of the liquid cryogen (40) in the first tank (14), and
- the second sensor (38) sensing a lower limit of the liquid cryogen (40) in the first tank (14).

10. The apparatus according to at least one of claims 1 to 6 or according to at least one of claims 7 to 9, wherein
- the liquid cryogen (24, 40) is a liquid selected from the group consisting of liquid nitrogen (LIN) and liquid carbon dioxide (CO₂), and
- the gaseous cryogen (54) is a gas selected from the group consisting of gaseous nitrogen (N₂) and carbon dioxide (CO₂),
- in particular the liquid cryogen (24, 40) comprising liquid nitrogen (LIN), and the gaseous cryogen (54) comprising nitrogen (N₂); or
- in particular the liquid cryogen (24, 40) comprising liquid carbon dioxide, and the gaseous cryogen (54) comprising carbon dioxide (CO₂).

11. A method of providing liquid cryogen (24, 40) with a pulsed flow (76), comprising:
- containing an amount of the liquid cryogen (24, 40);
- containing an amount of gaseous cryogen (54) under pressure;
- providing fluid communication between the liquid cryogen (24, 40) and the gaseous cryogen (54); and
- repetitively interrupting and continuing the fluid communication of the pressurized gaseous cryogen (54) to contact the liquid cryogen (24, 40) for generating the pulsed flow (76) of the liquid cryogen (24, 40).

12. The method according to claim 11, further comprising
- continuing the flow of the liquid cryogen (24, 40) having pulses (76) of the liquid cryogen (24, 40) therein; and/or
- sensing (36, 38) an amount of the liquid cryogen (24, 40) for determining replenishment of said liquid cryogen (24, 40).

13. A method of providing liquid cryogen (40) with a pulsed flow (76), comprising:
- providing a first tank (14) containing the liquid cryogen (40) therein;
- providing a second tank (16) containing gaseous cryogen (54) therein, the second tank (16) in fluid communication with the first tank (14); and
- repetitively pressurizing the first tank (14) with the gaseous cryogen (54) from the second tank (16) and releasing the pressure for correspondingly forcing discrete pulses (76) of the liquid cryogen (40) to be released from the first tank (14).

14. The method according to claim 13, further comprising supplying a flow of the liquid cryogen (24, 40) with the discrete pulses (76) of the liquid cryogen (40).

15. The method according to claim 11 or 12 or according to claim 13 or 14, wherein
- the liquid cryogen (24, 40) is a liquid selected from the group consisting of liquid nitrogen (LIN) and liquid carbon dioxide (CO₂), and
- the gaseous cryogen (54) is a gas selected from the group consisting of gaseous nitrogen (N₂) and carbon dioxide (CO₂),
- in particular the liquid cryogen (24, 40) comprising liquid nitrogen (LIN), and the gaseous cryogen (54) comprising nitrogen (N₂); or
- in particular the liquid cryogen (24, 40) comprising liquid carbon dioxide, and the gaseous cryogen (54) comprising carbon dioxide (CO₂).

## Patentansprüche

1. Vorrichtung (10) zur Bereitstellung von flüssigem Kältemittel (40) mit einem gepulsten Fluss (76), umfassend:
- einen ersten Tank (12), der einen ersten Teil von flüssigem Kältemittel (24) darin enthält;
- einen zweiten Tank (14), der einen zweiten Teil von flüssigem Kältemittel (40) darin enthält und einen Auslass (48) aufweist, wobei der zweite Tank (14) in Fluidverbindung mit dem ersten Tank (12) und dem ersten Teil darin steht;
- einen dritten Tank (16), der gasförmiges Kältemittel (54) unter Druck enthält, wobei der dritte Tank (16) in Fluidverbindung mit dem ersten Tank (12) und dem zweiten Tank (14) steht; und
- ein Paar von Ventilen (70, 74), umfassend
-- ein erstes Ventil (70), das dafür gestaltet ist, zwischen Unterbrechen und Weiterführen der Fluidverbindung zwischen dem zweiten Zank (14) und dem dritten Tank (16) zu alternieren, und
-- ein zweites Ventil (74), das zum bis zu 180 Grad phasenverschobenen Zusammenwirken mit dem ersten Ventil (70) gestaltet ist, um diskrete Pulse (76) des zweiten Teils des flüssigen Kältemittels (40) aus dem Auslass (48) bereitzustellen.

2. Vorrichtung gemäß Anspruch 1, ferner umfassend eine Düse (51), die an dem Auslass (48) angeordnet ist und durch die die diskreten Pulse (76) von flüssigem Kältemittel (40) treten.

3. Vorrichtung gemäß Anspruch 1 oder 2, wobei
- der erste Tank (12) einen ersten Kopfraum (26) über dem ersten Teil umfasst und
- der dritte Tank (16) in Fluidverbindung mit dem ersten Kopfraum (26) steht.

4. Vorrichtung gemäß wenigstens einem der Ansprüche 1 bis 3, wobei
- der zweite Tank (14) einen zweiten Kopfraum (46) über dem zweiten Teil umfasst und
- der dritte Tank (16) in Fluidverbindung mit dem zweiten Kopfraum (46) steht.

5. Vorrichtung gemäß wenigstens einem der Ansprüche 1 bis 4, wobei das erste Ventil (70) und das zweite Ventil (74) in Antwort auf die Menge und den Druck des zweiten Teils des flüssigen Kältemittels (40) in dem zweiten Tank (14) um 180 Grad phasenverschoben zusammenwirken.

6. Vorrichtung gemäß wenigstens einem der Ansprüche 1 bis 5, ferner umfassend eine Pumpe (58), die mit der Fluidverbindung zwischen dem ersten Tank (12) und dem dritten Tank (16) zusammenwirkt, um dem gasförmigen Kältemittel (54) Druck zu verleihen.

7. Vorrichtung (10) zur Bereitstellung von flüssigem Kältemittel (40) mit einem gepulsten Fluss (76), umfassend:
- einen ersten Tank (14), der flüssiges Kältemittel (40) enthält;
- einen zweiten Tank (16), der gasförmiges Kältemittel (54) unter Druck enthält, wobei der zweite Tank (16) in Fluidverbindung mit dem ersten Tank (14) steht und einen Auslass (48) aufweist; und
- ein Paar von Ventilen (70, 74), umfassend
-- ein erstes Ventil (70), das dafür gestaltet ist, zwischen Unterbrechen und Weiterführen der Fluidverbindung zwischen dem ersten Tank (14) und dem zweiten Tank (16) zu alternieren, und
-- ein zweites Ventil (74), das zum bis zu 180 Grad phasenverschobenen Zusammenwirken mit dem ersten Ventil (70) gestaltet ist, um wiederholte Zyklen zwischen Druckbeaufschlagen und Lösen von Druck des flüssigen Kältemittels (40) durchzuführen, um diskrete Pulse (76) des flüssigen Kältemittels (40) aus dem Auslass (48) bereitzustellen.

8. Vorrichtung gemäß Anspruch 7, ferner umfassend einen Massetank (12) mit zusätzlichem flüssigen Kältemittel (24) darin, der einen Kopfraum (26) aufweist, der zusätzliches gasförmiges Kältemittel über dem zusätzlichem flüssigen Kältemittel (24) aufweist,
- wobei das zusätzliche flüssige Kältemittel (24) in Fluidverbindung mit dem ersten Tank (14) steht und
- das zusätzliche gasförmige Kältemittel in dem Kopfraum (26) in Fluidverbindung mit dem zweiten Tank (16) steht.

9. Vorrichtung gemäß Anspruch 7 oder 8, ferner umfassend einen ersten Sensor (36) und einen zweiten Sensor (38), die in einem Innenraum des ersten Tanks (14) voneinander beabstandet sind,
- wobei der erste Sensor (36) eine Obergrenze des flüssigen Kältemittels (40) in dem ersten Tank (14) erfasst und
- der zweite Sensor (38) eine Untergrenze des flüssigen Kältemittels (40) in dem ersten Tank (14) erfasst.

10. Vorrichtung gemäß wenigstens einem der Ansprüche 1 bis 6 oder gemäß wenigstens einem der Ansprüche 7 bis 9, wobei
- das flüssige Kältemittel (24, 40) eine Flüssigkeit ausgewählt aus der Gruppe bestehend aus flüssigem Stickstoff (LIN) und flüssigem Kohlendioxid (CO₂) ist und
- das gasförmige Kältemittel (54) ein Gas ausgewählt aus der Gruppe bestehend aus gasförmigem Stickstoff (N₂) und Kohlendioxid (CO₂) ist,
- insbesondere das flüssige Kältemittel (24, 40) flüssigen Stickstoff (LIN) umfasst und das gasförmige Kältemittel (54) Stickstoff (N₂) umfasst; oder
- insbesondere das flüssige Kältemittel (24, 40) flüssiges Kohlendioxid umfasst und das gasförmige Kältemittel (54) Kohlendioxid (CO₂) umfasst.

11. Verfahren zum Bereitstellen von flüssigem Kältemittel (24, 40) mit einem gepulsten Fluss (76), umfassend:
- Halten einer Menge des flüssigen Kältemittels (24, 40);
- Halten einer Menge von gasförmigem Kältemittel (54) unter Druck;
- Bereitstellen einer Fluidverbindung zwischen dem flüssigen Kältemittel (24, 40) und dem gasförmigen Kältemittel (54); und
- Wiederholtes Unterbrechen und Weiterführen der Fluidverbindung des druckbeaufschlagten gasförmigen Kältemittels (54), um mit dem flüssigen Kältemittel (24, 40) in Kontakt zu kommen, um den gepulsten Fluss (76) des flüssigen Kältemittels (24, 40) zu erzeugen.

12. Verfahren gemäß Anspruch 11, ferner umfassend
- Fortführen des Flusses des flüssigen Kältemittels (24, 40) mit Pulsen (76) des flüssigen Kältemittels (24, 40) darin; und/oder
- Erfassen (36, 38) einer Menge des flüssigen Kältemittels (24, 40) zum Bestimmen von Nachfüllen des flüssigen Kältemittels (24, 40).

13. Verfahren zum Bereitstellen von flüssigem Kältemittel (40) mit einem gepulsten Fluss (76), umfassend:
- Bereitstellen eines ersten Tanks (14), der das flüssige Kältemittel (40) darin enthält;
- Bereitstellen eines zweiten Tanks (16), der gasförmiges Kältemittel (54) darin enthält, wobei der zweite Tank (16) in Fluidverbindung mit dem ersten Tank (14) steht; und
- Wiederholtes Druckbeaufschlagen des ersten Tanks (14) mit dem gasförmigen Kältemittel (54) aus dem zweiten Tank (16) und Lösen des Drucks, um entsprechend diskrete Pulse (76) des flüssigen Kältemittels (40) zur Freisetzung aus dem ersten Tank (14) zu drücken.

14. Verfahren gemäß Anspruch 13, ferner umfassend Liefern eines Flusses des flüssigen Kältemittels (24, 40) mit den diskreten Pulsen (76) des flüssigen Kältemittels (40).

15. Verfahren gemäß Anspruch 11 oder 12 oder gemäß Anspruch 13 oder 14, wobei
- das flüssige Kältemittel (24, 40) eine Flüssigkeit ausgewählt aus der Gruppe bestehend aus flüssigem Stickstoff (LIN) und flüssigem Kohlendioxid (CO₂) ist und
- das gasförmige Kältemittel (54) ein Gas ausgewählt aus der Gruppe bestehend aus gasförmigem Stickstoff (N₂) und Kohlendioxid (CO₂) ist,
- insbesondere das flüssige Kältemittel (24, 40) flüssigen Stickstoff (LIN) umfasst und das gasförmige Kältemittel (54) Stickstoff (N₂) umfasst; oder
- insbesondere das flüssige Kältemittel (24, 40) flüssiges Kohlendioxid umfasst und das gasförmige Kältemittel (54) Kohlendioxid (CO₂) umfasst.

## Revendications

1. Appareil (10) pour fournir du cryogène liquide (40) avec un flux puisé (76), comprenant :
- un premier réservoir (12) contenant une première partie de cryogène liquide (24) en son sein ;
- un second réservoir (14) contenant une seconde partie de cryogène liquide (40) et comprenant une sortie (48), le second réservoir (14) étant en communication fluidique avec le premier réservoir (12) et la première partie de celui-ci en son sein ;
- un troisième réservoir (16) contenant du cryogène gazeux (54) sous pression, le troisième réservoir (16) étant en communication fluidique avec le premier réservoir (12) et le second réservoir (14) ; et
- une paire de vannes (70, 74) comprenant
-- une première vanne (70) disposée afin d'alterner entre interruption et maintien de la communication fluidique entre le second réservoir (14) et le troisième réservoir (16), et
-- une seconde vanne (74) disposée pour la coopération avec un déphasage jusqu'à 180 degrés avec la première vanne (70) de façon à fournir des impulsions distintctes (76) de ladite seconde partie du cryogène liquide (40) provenant de la sortie (48).

2. Appareil selon la revendication 1, comprenant en outre une buse (51) disposée à la sortie (48) et à travers laquelle passent lesdites impulsions distinctes (76) de cryogène liquide (40).

3. Appareil selon la revendication 1 ou 2, dans lequel
- le premier réservoir (12) comprend un premier espace libre (26) au-dessus de la première partie, et
- le troisième réservoir (16) est en communication fluidique avec le premier espace libre (26) .

4. Appareil selon au moins l'une des revendications 1 à 3, dans lequel
- le second réservoir (14) comprend un second espace libre (46) au-dessus de la seconde partie, et
- le troisième réservoir (16) est en communication fluidique avec le second espace libre (46) .

5. Appareil selon au moins l'une des revendications 1 à 4, dans lequel la première vanne (70) et la seconde vanne (74) coopèrent avec un déphasage de 180 degrés en réponse à une quantité et à une pression de la seconde partie du cryogène liquide (40) au sein du second réservoir (14).

6. Appareil selon au moins l'une des revendications 1 à 5, comprenant en outre une pompe (58) coopérant avec la communication fluidique entre le premier réservoir (12) et le troisième réservoir (16) pour fournir de la pression au cryogène gazeux (54).

7. Appareil (10) pour fournir un cryogène liquide (40) avec un flux puisé (76), comprenant :
- un premier réservoir (14) contenant du cryogène liquide (40) ;
- un second réservoir (16) contenant du cryogène gazeux (54) sous pression, le second réservoir (16) étant en communication fluidique avec le premier réservoir (14) et comprenant une sortie (48) ; et
- une paire de vannes (70, 74) comprenant
-- une première vanne (70) disposée afin d'alterner entre interruption et maintien de la communication fluidique entre le premier réservoir (14) et le second réservoir (16), et
-- une seconde vanne (74) disposée pour coopérer jusqu'à 180 degrés en déphasage avec la première vanne (70) afin d'effectuer un cycle répétitif entre la pressurisation et la diminution de pression du cryogène liquide (40) de façon à produire des impulsions distinctes (76) dudit cryogène liquide (40) provenant de la sortie (48).

8. Appareil selon la revendication 7, comprenant en outre un réservoir d'accumulation (12) de cryogène liquide supplémentaire (24) et comprenant un espace libre (26) contenant du cryogène gazeux supplémentaire au-dessus du cryogène liquide supplémentaire (24),
- le cryogène liquide supplémentaire (24) étant en communication fluidique avec le premier réservoir (14), et
- le cryogène gazeux supplémentaire de l'espace libre (26) étant en communication fluidique avec le second réservoir (16).

9. Appareil selon la revendication 7 ou 8, comprenant en outre un premier capteur (36) et un second capteur (38) espacés au sein d'une partie interne du premier réservoir (14),
- le premier capteur (36) détectant une limite supérieure du cryogène liquide (40) dans le premier réservoir (14), et
- le second capteur (38) détectant une limite inférieure du cryogène liquide (40) dans le premier réservoir (14).

10. Appareil selon au moins l'une des revendications 1 à 6 ou selon au moins l'une des revendications 7 à 9, dans lequel
- le cryogène liquide (24, 40) est un liquide choisi dans le groupe constitué par de l'azote liquide (LIN) et du dioxyde de carbone liquide (CO₂), et
- le cryogène gazeux (54) est un gaz choisi dans le groupe constitué par de l'azote gazeux (N₂) et du dioxyde de carbone (CO₂),
- en particulier le cryogène liquide (24, 40) comprenant de l'azote liquide (LIN) et le cryogène gazeux (54) comprenant de l'azote (N₂) ; ou
- en particulier le cryogène liquide (24, 40) comprenant du dioxyde de carbone liquide et le cryogène gazeux (54) comprenant du dioxyde de carbone (CO₂).

11. Procédé pour fournir du cryogène liquide (24, 40) avec un flux puisé (76), comprenant :
- le fait qu'il contient une certaine quantité de cryogène liquide (24, 40) ;
- le fait qu'il contient une quantité de cryogène gazeux (54) sous pression ;
- la réalisation d'une communication fluidique entre le cryogène liquide (24, 40) et le cryogène gazeux (54) ; et
- l'interruption et le maintien de manière répétée de la communication fluidique du cryogène gazeux sous pression (54) afin qu'il entre en contact avec le cryogène liquide (24, 40) dans le but de générer le flux puisé (76) du cryogène liquide (24, 40).

12. Procédé selon la revendication 11, comprenant en outre
- la continuation du flux du cryogène liquide (24, 40) réalisé avec des impulsions (76) du cryogène liquide (24, 40) en son sein ; et/ou
- la détection (36, 38) d'une certaine quantité du cryogène liquide (24, 40) pour déterminer le réapprovisionnement dudit cryogène liquide (24, 40).

13. Procédé pour fournir du cryogène liquide (40) avec un flux puisé (76), comprenant :
- la fourniture d'un premier réservoir (14) contenant le cryogène liquide (40) en son sein ;
- la fourniture d'un second réservoir (16) contenant du cryogène gazeux (54) en son sein, le second réservoir (16) étant en communication fluidique avec le premier réservoir (14) ; et
- de manière répétée, la pressurisation du premier réservoir (14) avec le cryogène gazeux (54) provenant du second réservoir (16) et la diminution de la pression afin de forcer de manière correspondante des impulsions distinctes (76) du cryogène liquide (40) à s'échapper du premier réservoir (14).

14. Procédé selon la revendication 13, comprenant en outre la fourniture d'un flux du cryogène liquide (24, 40) avec les impulsions distinctes (76) du cryogène liquide (40).

15. Procédé selon la revendication 11 ou 12 ou selon la revendication 13 ou 14, dans lequel
- le cryogène liquide (24, 40) est un liquide choisi dans le groupe constitué par l'azote liquide (LIN) et le dioxyde de carbone liquide (CO₂), et
- le cryogène gazeux (54) est un gaz choisi dans le groupe constitué par l'azote gazeux (N₂) et le dioxyde de carbone (CO₂),
- en particulier le cryogène liquide (24, 40) comprenant de l'azote liquide (LIN) et le cryogène gazeux (54) comprenant de l'azote (N₂) ; ou
- en particulier le cryogène liquide (24, 40) comprenant du dioxyde de carbone liquide et le cryogène gazeux (54) comprenant du dioxyde de carbone (CO₂).
